Europäisches Patentamt

European Patent Office

Office européen des brevets

(19)

(11) EP 0 701 703 B1

(12) **FASCICULE DE BREVET EUROPEEN**

(45) Date de publication et mention
de la délivrance du brevet:
**17.09.1997 Bulletin 1997/38**

(21) Numéro de dépôt: **94916290.3**

(22) Date de dépôt: **16.05.1994**

(51) Int Cl.6: **G01V 5/00**, G01N 23/06

(86) Numéro de dépôt international:
**PCT/FR94/00580**

**WO 94/28442 (08.12.1994 Gazette 1994/27)**

(54) **PROCEDE ET DISPOSITIF POUR LA RECONNAISSANCE DE MATERIAUX DETERMINES DANS LA COMPOSITION D'UN OBJET**

VERFAHREN UND VORRICHTUNG ZUR ERKENNUNG VON BESTIMMTEN MATERIALIEN IN DER ZUSAMMENSETZUNG EINES GEGENSTANDS

METHOD AND DEVICE FOR IDENTIFYING DESIGNATED MATERIALS IN THE COMPOSITION OF AN OBJECT

(84) Etats contractants désignés:
**AT BE CH DE DK ES FR GB GR IE IT LI LU MC NL PT SE**

(30) Priorité: **28.05.1993 FR 9306448**

(43) Date de publication de la demande:
**20.03.1996 Bulletin 1996/12**

(73) Titulaire: **EUROP SCAN
94533 Rungis Cédex (FR)**

(72) Inventeurs:
• **MAITREJEAN, Serge
F-75013 Paris (FR)**
• **PERION, Didier
F-75013 Paris (FR)**

(74) Mandataire: **Serin, Jean-Pierre
Cabinet Loyer,
78, avenue Raymond Poincaré
75116 Paris (FR)**

(56) Documents cités:
**US-A- 3 673 394**

## Description

La présente invention concerne un procédé pour la reconnaissance de matériaux déterminés dans la composition d'un objet et un dispositif pour sa mise en oeuvre. Elle s'applique notamment à la détection de matériaux spécifiques tels par exemple des explosifs ou de la drogue.

Le document US-A-3 673 394 décrit une méthode et un dispositif de mesure de la forme, la position et la densité d'un objet caché soumis à des rayons X dans deux directions angulaires différentes et pour lequel on mesure le variation d'énergie.

Le document de brevet WO 9202892 décrit plusieurs procédés et dispositifs pour l'inspection des bagages et la détection de matériaux spécifiques. L'objet à inspecter est soumis à un faisceau de rayons X présentant alternativement deux énergies différentes (basse et haute). On mesure l'atténuation du faisceau à la traversée de l'objet. Donc en chaque point de l'image, on possède un couple d'atténuations, une pour la gamme d'énergie haute et l'autre pour la gamme d'énergie basse. Par ailleurs, des mesures préliminaires sont effectuées. Elles consistent à déterminer des couples d'atténuations (une pour la gamme d'énergie haute, l'autre pour la gamme d'énergie basse) pour une grande quantité d'échantillons représentatifs du ou des matériaux spécifiques recherchés dans l'objet. Pour chaque type de matériau spécifique, les échantillons sont formés par différentes épaisseurs de matériau spécifique recouvertes par différentes épaisseurs d'un matériau de recouvrement. Tous ces couples d'atténuations de référence sont classés dans une table enregistrée en mémoire. Ils sont aussi mis en correspondance avec un paramètre P égal à l'épaisseur de matériau spécifique pour l'échantillon considéré. Lorsque l'objet à inspecter est soumis au faisceau de rayons X, pour un point de l'image, le couple d'atténuations mesuré est comparé aux couples d'atténuations enregistrés dans la table. Par interpolation, on déduit une valeur du paramètre P. En effectuant une corrélation entre au moins une des atténuations du couple mesuré, par exemple l'atténuation dans la gamme d'énergie haute, et la valeur de P, on peut déduire si l'objet contient une certaine quantité de matériau spécifique au point considéré. Les risques d'erreur de détection et donc de fausse alerte sont diminués en comparant les différents points de l'image avec leurs voisins.

Cette méthode présente des inconvénients majeurs.

Deux mesures sont effectuées pour chaque point de l'image, l'une pour les hautes énergies, l'autre pour les basses énergies. Ces deux mesures sensiblement indépendantes, permettent de déduire deux informations indépendantes en chaque point. Ces deux informations indépendantes sont utilisées pour extraire des indications sur la composition chimique de l'objet à inspecter.

L'indépendance de ces deux informations provient du fait que deux effets physiques prédominants peuvent survenir lors de l'interaction d'un photon X avec un matériau: l'effet Compton et l'effet photoélectrique. Mais d'autres informations indépendantes sont accessibles, ceci étant dû au fait qu'il existe d'autres effets physiques indépendants lors de ce type d'interaction.

La méthode proposée dans le document WO 9202892 n'exploite donc pas toutes les informations qu'il est possible d'extraire d'une interaction d'un photon X avec un matériau.

Pour compenser la restriction à deux informations indépendantes pour obtenir des indications sur la composition chimique de l'objet inspecté, le procédé de l'art antérieur préconise d'utiliser des corrélations entre les atténuations mesurées et un paramètre P correspondant à des valeurs d'atténuations tabulées. Ces valeurs d'atténuations tabulées doivent être enregistrées en très grand nombre pour limiter le risque d'erreur d'interprétation. Malgré tout, aussi grand que soit le nombre de couples d'atténuations tabulées, la méthode, très indirecte, n'élimine pas le risque de fausse alerte ou à l'inverse, de non détection du matériau recherché.

Par ailleurs, les caractéristiques (en intensité, en forme de spectre, en énergie ...) du faisceau de rayons X varient rapidement et de manière notable dans le temps.

Les couples d'atténuations enregistrés dans la table, résultant d'une calibration effectuée avec un faisceau présentant certaines caractéristiques, dépendent de ces caractéristiques et ne sont plus valables comme référence pour un faisceau présentant d'autres caractéristiques.

De ce fait, il peut arriver qu'à cause des modifications du faisceau, les reconnaissances de matériau spécifique soient de fausses alertes, et plus grave, il peut arriver que le système ne détecte pas la présence d'un matériau spécifique dans l'objet. Ce dernier cas peut entraîner de funestes conséquences si le matériau spécifique est un explosif placé dans un bagage.

Les variations de caractéristiques du faisceau peuvent être compensées grâce à des calibrations effectuées à intervalles réguliers et suffisamment courts pour éviter que les dérives du faisceau entraînent une perturbation dans la détection. Mais étant donné le mode de fonctionnement de la méthode, pour effectuer une calibration, il faut mesurer tous les couples d'atténuations enregistrés dans la table et ensuite refaire les correspondances avec les valeurs du paramètre P.

De façon concrète, il faut faire défiler dans le trajet du faisceau différentes épaisseurs de matériau spécifique à tester et différentes épaisseurs d'un matériau de recouvrement. L'interpolation d'un couple d'atténuations dans les couples tabulés est d'autant plus précise que le nombre de couples tabulés est grand. Par conséquent, la mise à jour des couples d'atténuations tabulés prend un temps important, incompatible avec un fonctionnement continu du dispositif. On peut fractionner les calibrations et effectuer les mesures de calibration pendant les temps morts de la machine, c'est à dire dans le cas de l'inspection de bagages, dans les temps séparant le passage de deux bagages successifs. Malgré cela, lorsque le nombre d'échantillons (un échantillon correspondant à une épaisseur donnée de matériau spécifique accolé à une épaisseur donnée de matériau de recouvrement) est élevé, comme cela est nécessaire pour obtenir une précision suffisante, la durée entre deux raffraichissements d'un couple d'atténuations tabulé est importante et les riques d'erreur ne sont pas négligeables.

La présente invention propose de pallier ces inconvénients. Pour cela, au lieu d'utiliser deux mesures d'atténuation correspondant l'une à une gamme d'énergie basse et l'autre à une gamme d'énergie haute, l'invention préconise l'utilisation de la fonction d'atténuation sur un large spectre.
De cette manière, on peut déduire au moins trois informations indépendantes pour caractériser chimiquement un objet. En théorie, l'utilisation de la fonction d'atténuation devrait permettre d'obtenir une grande quantité d'informations indépendantes, mais il se trouve que les phénomènes physiques de moindre probabilité que les effets Compton ou photoélectrique intervenant lors des interactions des photons X avec la matière sont en fait partiellement corrélés entre eux, limitant de ce fait le nombre d'informations que l'on peut tirer des mesures d'atténuation.

De manière plus précise, la présente invention concerne un procédé pour la reconnaissance de matériaux déterminés dans la composition d'un objet. Ce procédé comprend les étapes suivantes:

A. Préalablement, déterminer la fonction d'atténuation sur un spectre large de rayons X d'au moins trois matériaux de référence et en déduire des fonctions de projection formant une base;
B. Lors d'une seconde étape préliminaire, déterminer la fonction d'atténuation sur ledit spectre de rayons X d'au moins un matériau de test et projeter la fonction d'atténuation de chaque matériau de test sur ladite base;
C. Pour chaque point de l'objet,

- déterminer la fonction d'atténuation de l'objet sur ledit spectre de rayons X,
- projeter la fonction d'atténuation de l'objet sur ladite base,
- comparer les projections ainsi obtenues aux projections de chaque matériau de test et déduire de cette comparaison si au moins un matériau de test entre dans la composition de l'objet, au point considéré.

De manière avantageuse, le spectre de rayons X s'étend au moins sur une gamme allant de 30 à 100 keV. Préférentiellement, la fonction d'atténuation de l'objet ,

les fonctions d'atténuation des matériaux de référence, les fonctions d'atténuation des matériaux de test sont toutes exprimées en fonction d'une variable u en relation bijective avec l'énergie des rayons X.

Cette variable u peut être égale à l'atténuation d'une épaisseur fixée d'un matériau de calibration. Ce matériau de calibration possède avantageusement un numéro atomique effectif Z effectif compris dans une gamme allant de 5 à 26.

De manière préférée, les fonctions de projection sont orthogonales : entre elles.
Selon un mode de réalisation particulier, les fonctions de projection sont des fonctions propres associées à des valeurs propres déterminées par la diagonalisation d'une matrice constituée des produits scalaires des fonctions d'atténuation des matériaux de référence.

Selon ce mode de réalisation avantageusement, lors d'une étape préliminaire, pour chaque matériau de test, on détermine un ensemble de coefficients de projection résultant de la projection des fonctions d'atténuation des matériaux de test sur ladite base, et lesdites valeurs propres étant classées par ordre décroissant, de chaque ensemble de coefficients de projection, on déduit un ensemble de coefficients de comparaison pour les matériaux de test en divisant chaque coefficient de projection de l'ensemble considéré par le coefficient de l'ensemble considéré correspondant à la projection sur la fonction de projection associée à la plus grande des valeurs propres, ces ensembles de coefficients de comparaison pour les matériaux de test étant utilisés pour des comparaisons permettant de déduire si au moins un matériau de test entre dans la composition de l'objet.

Si l'objet inspecté est composé de la réunion d'objets unitaires, on réalise une image des contours des objets unitaires, les contours étant des zones de transition entre les différents objets unitaires, pour chaque point de l'objet, on détermine un ensemble de coefficients de projection résultant de la projection de la fonction d'atténuation de l'objet sur ladite base, on détermine des variations des ensembles de coefficients de projection de l'objet à l'intérieur des zones de transition, on déduit de ces variations des coefficients de comparaison avec les coefficients de comparaison pour les matériaux de test.

Avantageusement, les numéros atomiques effectifs des matériaux de référence sont régulièrement répartis dans une gamme allant de 3 à 30.
Dans ce cas, de manière préférée, un premier matériau de référence est choisi parmi les matériaux présentant un numéro atomique effectif compris dans une gamme allant de 3 à 7, en ce qu'un deuxième matériau de référence est choisi parmi les matériaux présentant un numéro atomique effectif compris dans une gamme allant de 7 à 10; en ce qu'un troisième matériau de référence est choisi parmi les matériaux présentant un numéro atomique affectif compris dans une gamme allant de 10 à 17 et en ce qu'un quatrième matériau de référence est choisi parmi les matériaux présentant un numéro atomique effectif compris dans une gamme allant de 17 à 30.

Le premier matériau de référence peut être du polyéthylène, en ce que le second matériau de référence est du Téflon, en ce que le troisième matériau de référence est du duralumin, en ce que le quatrième matériau de référence est du fer.

Les matériaux de test peuvent être des explosifs ou de la drogue dans une application à l'inspection de bagages.

L'invention concerne aussi un dispositif pour la mise en oeuvre d'un tel procédé. Ce dispositif comprend:

- des moyens pour déterminer des fonctions d'atténuation sur un spectre large de rayons X, ces fonctions d'atténuation étant exprimées en fonction d'une variable u en relation bijective avec l'énergie des rayons X,
- des moyens de traitement aptes à effectuer des projections des fonctions d'atténuation sur des fonctions formant une base et préalablement déterminées à partir des fonctions d'atténuation d'au moins trois matériaux de référence,
- des moyens de convoyage d'un objet à caractériser, permettant de soumettre cet objet aux moyens pour déterminer une fonction d'atténuation,
- des moyens de comparaison des projections de la fonction d'atténuation de l'objet à des projections préalablement effectuées de fonctions d'atténuation d'au moins un matériau de test et pour déduire de cette comparaison si au moins un matériau de test entre dans la composition de l'objet, et
- des moyens d'affichage apte à afficher au moins une image de l'objet en différenciant les points pour lesquels un matériau de test entre dans la composition de l'objet.

Avantageusement, le dispositif comprend des moyens de traitement d'images aptes à former une image de contours.

De manière préférée, les moyens pour déterminer des fonctions d'atténuation comprennent une cible en matériau de calibration, et possédant différentes épaisseurs, cette cible étant apte à défiler à volonté dans le faisceau de rayons X.

Selon une première variante, les moyens pour déterminer une fonction d'atténuation comprennent une source délivrant un faisceau de rayons X successivement sur plusieurs plages spectrales et une barrette de détecteurs, chaque détecteur étant sensible à toutes les plages spectrales.

Selon une autre variante, les moyens pour déterminer une fonction d'atténuation comprennent un générateur de faisceau de rayons X sur un spectre large et fixe et une barrette d'empilements de détecteurs, chaque détecteur d'un empilement jouant le rôle de filtre passe-haut pour le détecteur adjacent suivant.

Le procédé et le dispositif de l'invention présentent de nombreux avantages par rapport à l'art antérieur. Les éléments de comparaison sont ici des fonctions d'atténuation (ou plus précisément leurs projections sur des fonctions de base) des matériaux de test. Le nombre d'informations indépendantes sur la composition de l'objet que l'on peut donc tirer sont au minimum égales au nombre d'informations obtenu par les techniques de l'art antérieur. Sans difficulté, on a accès à au moins une information supplémentaire, ce qui améliore la sensibilité et la fiabilité du système.

Ces fonctions d'atténuation une fois déterminées et enregistrées ne sont plus soumises à des fluctuations. Cela simplifie considérablement les problèmes de calibration.

Pour compenser les dérives éventuelles du faisceau de rayons X, il suffit d'effectuer des mesures de l'atténuation des différentes épaisseurs du matériau de calibration. Ceci peut-être fait très rapidement (de l'ordre de 10 s par mesure) et fréquemment, ce qui permet d'éviter toute erreur de détection due à des modifications dans les caractéristiques du faisceau.

La présente invention et ses avantages seront mieux comprise à la lecture de la description qui suit donnée à titre illustratif et non limitatif, en référence aux dessins annexés sur lesquels:

la figure 1 représente schématiquement un dispositif pour la mise en oeuvre du procédé conforme à l'invention;
la figure 2 représente schématiquement une suite de spectres en énergie utilisée pour mesurer des transmissions;
la figure 3 représente schématiquement une variante de réalisation d'un dispositif pour la mise en oeuvre du procédé conforme à l'invention;
la figure 4 représente schématiquement une image de contours d'un objet; et
la figure 5 représente schématiquement une vue agrandie d'une partie de l'image de la figure 4.

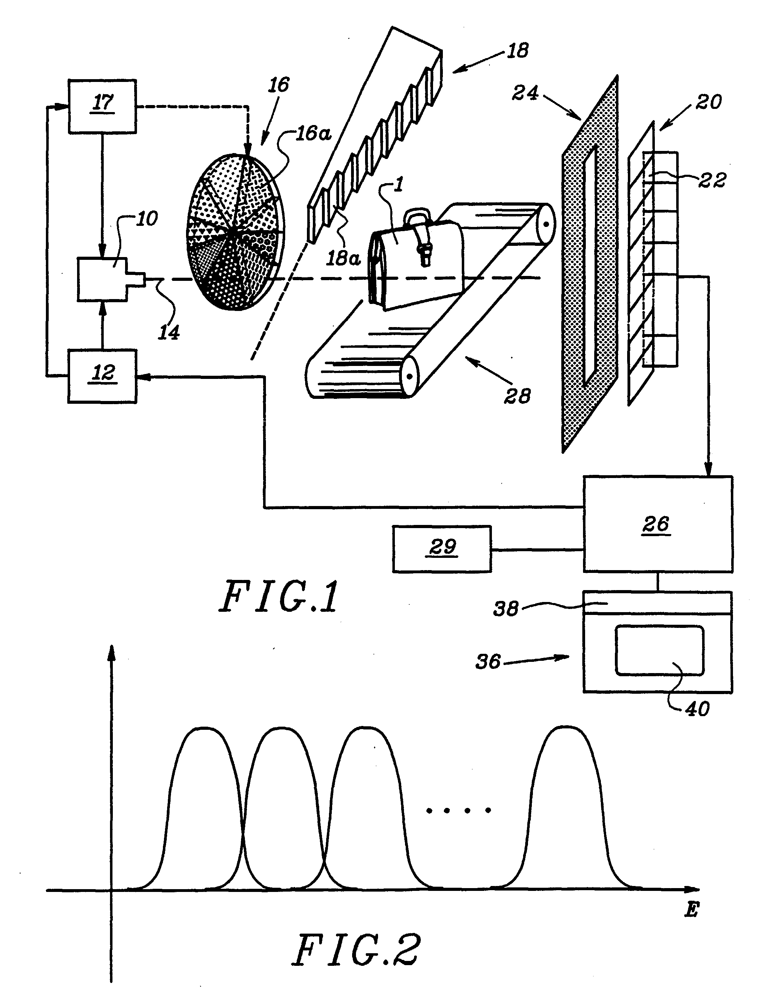

En référence à la figure 1, on décrit maintenant un dispositif pour la mise en oeuvre du procédé conforme à l'invention.

Le dispositif comprend des moyens pour déterminer une fonction d'atténuation sur un spectre large de rayons X.

Comme on le verra dans le cours de la description, ces moyens de détermination d'une fonction d'atténuation sont utilisés à plusieurs fois:

- Une première fois, pour mesurer des fonctions d'atténuation de matériaux de référence. Ces fonctions d'atténuation servent à la détermination de fonctions formant une base. Ces mesures sont faites une fois pour toute lors d'une étape préliminaire.
- Une seconde fois, pour mesurer des fonctions d'atténuation de matériaux de test dont on recherche la présence dans la composition des objets à caractériser Ces mesures sont aussi effectuées une fois pour toute lors d'une seconde étape préliminaire;

- Une troisième fois, pour mesurer les fonctions d'atténuation en chaque point de l'objet à caractériser.

Un générateur 10 de rayons X délivre, sous la commande d'un système de commande 12 à potentiel variable, un faisceau en éventail 14 (la forme en éventail étant obtenue de façon connue à l'aide d'un collimateur en forme de fente non représenté) dont l'énergie maximum est variable en fonction du potentiel appliqué au générateur de rayons X. Un système 16 permet de faire défiler différents filtres 16a, en synchronisme avec la variation d'énergie du faisceau. Dans l'exemple de la figure 1, le système à filtres 16 comprend un disque dont les portions correspondent chacune à un filtre différent. Les filtres sont du type passe-haut et sont connus en eux mêmes. A chaque potentiel appliqué au générateur de rayons X correspond un filtre.

La rotation du disque est entraînée par un système de commande 17 connecté à la commande 12 pour régler la synchronisation.

D'autres systèmes à filtres peuvent être utilisés de manière équivalente; par exemple les filtres disposés successivement peuvent défiler dans le parcours du faisceau sous l'effet d'une translation.

Sur la figure 2, on a représenté la suite des spectres obtenus successivement lors de la rotation du disque en fonction de l'énergie. Les filtres sont choisis de manière à obtenir un chevauchement des spectres successifs.

Dans le spectre en énergie du faisceau 14, chaque filtre supprime toutes les énergies inférieures à un seuil caractéristique du filtre. Pour chaque spectre de la figure 2, la partie des hautes énergies correspond à l'énergie maximale délivrée par le générateur 10 lorsque le filtre associé est placé dans le parcours du faisceau. Dans la pratique, les spectres en énergie ne sont pas caractérisés de manière précise, et leur forme exacte est sans incidence notable sur la mesure. Par contre, il est important que la forme et l'intensité de chaque spectre ne varient pas entre le moment où l'on effectue les mesures de référence et les mesures sur l'objet à caractériser.

Par ailleurs, les faibles discontinuités dans la succession des spectres sont, elles aussi, sans incidence sur les mesures. Toutefois, pour ne pas perturber les mesures, ces discontinuités doivent être inférieures à 5 keV pour la plage allant de 20 à 40 keV et inférieure à 10 keV au delà.

De retour à la figure 1, on voit que le dispositif comprend une cible ou pièce 18 en forme de marches d'escalier. Chaque marche correspond à un échantillon de matériau d'épaisseur différente.

Cette pièce 18 est réalisée dans un matériau de calibration dont le numéro atomique effectif Z peut être compris entre 5 et 26. On choisit par exemple l'alliage connu sous le nom Duralumin (mélange composé de 95% Al, 4,5%Cu, et 0,5%Mn) dont le Z effectif est environ égal à 13,5.

Dans cette réalisation, l'épaisseur de la seconde marche 18a est choisie comme épaisseur de référence. Bien entendu, toute autre marche pourrait être choisie comme marche de référence.

L'épaisseur de référence pour le Duralumin peut être choisie dans la gamme allant de 1 à 5mm, par exemple 4mm.

D'une manière générale, un nombre N d'épaisseurs distinctes de matériau de calibration, et donc de marches de la pièce 18, est nécessaire lorsque N+1 spectres sont utilisés. Une pièce 18 comprenant neuf marches est donc adaptée à un dispositif utilisant dix spectres en énergie.

La pièce 18 peut être placée à volonté sur le parcours du faisceau grâce à un mouvement de translation. Pour des raisons de clarté de représentation, le dispositif permettant la translation de la pièce 18 n'est pas représenté sur la figure 1.

Par ailleurs, la pièce 18 peut prendre d'autres formes, équivalentes à celle de la pièce représentée. Par exemple, la pièce 18 peut prendre la forme d'un disque dont les portions possèdent les différentes épaisseurs souhaitées et dont une portion est évidée pour laisser libre le trajet du faisceau.

Sur la figure 1, on voit que le dispositif comprend une barrette 20 de détecteurs 22, placée dans le trajet du faisceau 14. Une barrette 20 comprend environ mille détecteurs 22, par exemple, formés chacun d'une scintillateur et d'une photodiode. La barrette de détecteurs est placée à l'arrière d'un élément de collimation 24, par exemple une fente. La barrette de détecteurs permet la formation d'une colonne d'image, chaque détecteur 22 correspond à un pixel de l'image. La barette peut également prendre la forme d'un L.

Les détecteurs 22 de la barrette 20 sont connectés en sortie à l'entrée d'un système de traitement 26, du type d'un ordinateur doté de mémoires.

Conformément au procédé de l'invention, une première étape consiste à déterminer pour chaque point de l'objet 1 à caractériser la fonction d'atténuation de cet objet dans une gamme d'énergie s'étendant au moins entre 30 et 100 keV. Elle peut être par exemple égale à la gamme allant de 20 à 150 keV. L'objet 1 prend sur la figure 1 la forme d'une valise, à titre d'exemple.

Pour chaque détecteur 22, lors d'une étape préliminaire où l'objet 1 n'est pas placé dans le faisceau, on effectue des mesures de calibration. Ces mesures de calibration consistent à mesurer l'intensité transmise par les différentes épaisseurs de la pièce 18 soumises au faisceau de mesure.

Dans un premier temps, on mesure cette intensité transmise pour une épaisseur nulle, c'est à dire sans que la pièce 18 soit interposée dans le trajet du faisceau.

Le système 26 commande la variation du potentiel variable et le filtrage adéquat du faisceau par le système 16 à filtres. Sous l'effet conjugué de la variation de potentiel et du filtrage adéquat, le faisceau de mesure 14 présente successivement N+1 spectres en énergie différents. N+1 peut être par exemple égal à 10.

A chaque valeur d'énergie maximum du faisceau correspond un filtre du système 16 pour obtenir successivement les différents spectres en énergie. Chaque variation de l'énergie maximum est synchronisée avec le positionnement d'un nouveau filtre.

Chaque détecteur 22 mesure l'intensité du faisceau de mesure pour chacun des spectres et ces mesures sont mises en mémoire par le système de traitement 26.

On refait ces mêmes mesures mais en plaçant successivement sur le trajet du faisceau les différentes épaisseurs de la pièce 18. Une fois ces mesures enregistrées en mémoire par le système 26, la pièce 18 est retirée du trajet du faisceau.

La calibration du dispositif est donc très rapide. Lors d'une utilisation continue du dispositif, appliqué à la surveillance de bagages, elle peut-être renouvellée à chaque intervalle entre deux bagages.

La cible 18 est ensuite retirée du trajet du faisceau et l'objet 1 à caractériser est placé sur ce trajet. Pour cela, l'objet est placé sur un convoyeur 28 du type d'un tapis roulant. La translation de l'objet est suffisamment lente pour permettre la formation successives des lignes d'image. De façon optimale, le déplacement de l'objet est perpendiculaire au plan formé par l'axe longitudinal de la fente 24 et/ou de la barette 20 et par le point focal du tube générateur de rayons X.

Pour une ligne d'image, l'objet 1 est soumis successivement à chacun des spectres en énergie réalisés par la variation de l'énergie maximum du faisceau synchronisée avec l'interposition du filtre adéquat. Pour chaque spectre en énergie, l'intensité transmise après traversée de l'objet est mesurée par les détecteurs 22 de la barette 20 et mise en mémoire.

Grâce à ces mesures, le système 26 déduit une formule analytique de l'atténuation de l'objet, pour chaque pixel. Cette atténuation est exprimée en fonction d'une variable u en relation bijective avec l'énergie E. Dans l'exemple présentement décrit, u est égale à la transmission d'une épaisseur donnée de la pièce 18, par exemple, celle de la seconde marche 18a, prise comme référence.

Dans l'exemple choisi où la pièce 18 est en Duralumin dont la densité d (exprimée en g/cm$^3$) est égale à 2,7 et où l'épaisseur ep de la deuxième marche choisie comme référence est égale à 0,4cm, la variable u est égale à: $u = e^{-att(E) . 2,7 . 0,4}$ où att(E) est l'atténuation massique.

De façon général, on a: $u = e^{-att(E) . d . ep}$

Si on définit l'indice j comme étant le numéro du spectre auquel est soumis l'objet, j=1 correspondant au spectre d'énergie maximum la plus basse, alors l'intensité Dj transmise par l'objet s'exprime comme suit:

$$D_j = \int I_j (E) \, T_r (E) \, dE \qquad (0)$$

ou

$$D_j = \int I_j (E) \, e^{-att(E)} \, dE \qquad (1)$$

où $I_j (E)$ est l'intensité du j$^{ème}$ spectre en énergie, fonction de l'énergie E, $T_r (E)$ et att (E) sont respectivement la fonction de transmission et d'atténuation exprimées ici en fonction de l'énergie E. En effectuant un changement de variable, faisant apparaître le paramètre u à la place de E, $D_j$ s'écrit :

$$D_j = \int I'_j (u) \, e^{-att'(u)} \, du \qquad (2)$$

où $I'_j (u)$ est l'intensité du j$^{ème}$ spectre exprimée en fonction de u et att' (u) est la fonction d'atténuation recherchée.

La fonction de transmission de l'objet est exprimée en fonction du paramètre u . Dans une première étape, le système 26 réalise ce changement de variable puis il fait l'approximation suivante: la fonction de transmission de l'objet est exprimée comme un développement polynomial fini en puissances du paramètre u; soit:

$$e^{-att'\ (u)} \sim \sum_{i=0}^{N} a_i \, u^{f(i)} \qquad (3)$$

i étant un indice qui varie de 0 à N.
Cette approximation s'est en pratique révélée très précise.

Le nombre de termes du développement (N+1) est inférieur ou égal au nombre de spectres en énergie différentes utilisés pour les mesures de transmission. Il est par conséquent inférieur ou égal au nombre N d'épaisseurs de matériau de référence utilisées pour la calibration plus un (ce qui correspond à l'absence de la pièce 8 dans le faisceau). De ce fait, chaque indice i correspond à un numéro de marche de la pièce 18, l'indice i = 0 correspondant à une épaisseur nulle c'est à dire que la pièce 18 n'est pas dans le trajet du faisceau.

Pour chaque valeur de i, f (i) puissance du développement dans l'équation (3), représente un rapport entre une des épaisseurs du matériau de calibration et l'épaisseur de référence.
De manière avantageuse, ces rapports sont tels que les puissances f(i) augmentées de 1/2 forment une suite géométrique.
Sous forme d'expression mathématique, ce choix peut s'écrire:

$$f(i)+1/2=a^i(f(o)+1/2);$$

De plus, on choisit f (o) = o pour que i = o corresponde au trajet libre du faisceau et donc à une épaisseur nulle; par conséquent :

$$f(i)=(a^i-1)/2.$$

De plus, on inclut préférentiellement dans la suite, l'épaisseur de référence. De cette manière, si la seconde marche est choisie comme épaisseur de référence, on a :

f (2) = 1 et par conséquent a = $\sqrt{3}$; la raison de la suite est égale à racine carrée de trois.

On peut montrer que ce choix pour les valeurs des puissances du développement et donc pour les épaisseurs des marches permet d'obtenir un développement stable.

En réalité, à cause des inévitables imprécisions d'usinage, les f (i) ne prennent pas exactement les valeurs calculées. Mais ces faibles écarts sont sans conséquence sur la validité du résultat.

On montre que l'intensité transmise par l'objet 1 pour le spectre j peut se décomposer comme suit :

$$D_j = \sum_{i=0}^{N} a_i\, C_{ji} \qquad (4)$$

somme dans laquelle les termes $C_{ji}$ correspondent pour chaque spectre j à l'intensité transmise par les différentes épaisseurs de matériau de calibration, i=0 correspondant à l'épaisseur nulle (la pièce 18 étant hors du trajet du faisceau).

Dans l'égalité (4) , les $D_j$ et les $C_{ji}$ sont connus par leur mesure, seuls les coefficients $a_i$ sont inconnus. Le nombre d'épaisseurs de matériau de calibration (en comptant en plus l'épaisseur nulle) peut être choisi inférieur ou égal au nombre de spectres pour que l'on puisse déterminer les coefficients $a_i$. Dans l'exemple décrit ici, on réalise dix spectres différents en énergie, la cible 18 comporte neuf marches auxquelles il faut adjoindre les mesures supplémentaires effectuées lorsque la pièce 18 est hors du trajet du faisceau.

Par conséquent, lors d'une étape suivante, à l'aide des valeurs mises en mémoire lors de la calibration et des mesures de transmission de l'objet, le système 26 détermine les $a_i$. Ceci peut être réalisé par toute méthode connue par exemple par la méthode des moindres carrés. L'atténuation Att est définie comme:

Att = -LogTr où Tr est la transmission.

Une fois, les coefficients $a_i$ déterminés, le système 26 les remplace par leurs valeurs dans l'équation (3), en prend le logarithme népérien et multiplie par (-1). De cette manière, le système 26 déduit la fonction d'atténuation de l'objet 1 en fonction du paramètre u.

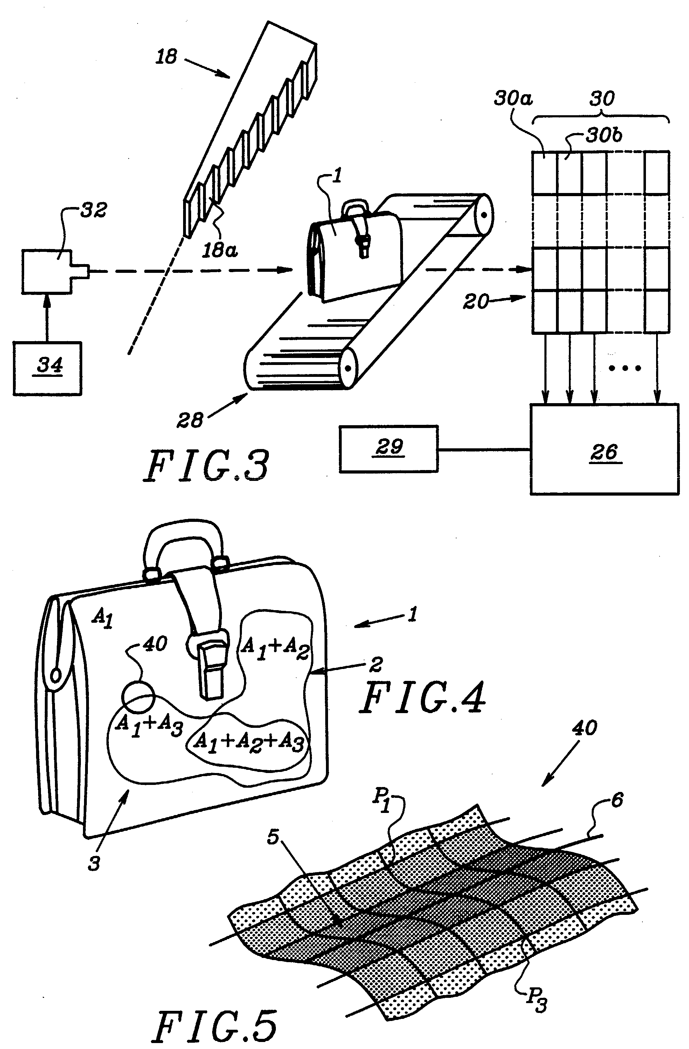

La figure 3 représente schématiquement une variante de réalisation. Au lieu de tester successivement les différents spectres en énergie du faisceau 14, un faisceau de mesure à spectre fixe et large est utilisé. Pour chaque pixel, les mesures d'intensité transmise par la pièce 18 ou par l'objet 1 sont effectuées grâce à un empilement 30 de détecteurs 30a, 30b,... Chaque détecteur peut être formé d'un scintillateur et d'une photodiode.

Les empilements 30 sont juxtaposés pour former une barrette 20 représentée partiellement sur la figure 3. Chaque détecteur joue le rôle de filtre passe haut pour les détecteurs suivants. C'est ainsi que chaque détecteur délivre un signal électrique correspondant à l'intensité pour une partie déterminée du spectre large en énergie. On comprend donc que dans le dispositif de la figure 1, les objets à caractériser sont soumis à un faisceau de mesure présentant successivement des spectres en énergie différents de manière à balayer la gamme en énergie désirée, alors que dans le dispositif de la figure 3, les objets sont soumis à un faisceau de mesure à spectre large correspondant à la gamme en énergie désirée, ce spectre large étant ensuite filtré par les différents détecteurs.

Le dispositif de la figure 3 comprend un générateur de faisceau de mesure 32. Ce générateur 32 est connecté à une commande 34 à potentiel fixe telle que le faisceau de mesure présente un spectre large en énergie. Par spectre large en énergie, on entend toute la gamme d'énergie que l'on désire tester, par exemple la gamme s'étendant de 20 keV à 150 keV.

Comme précédemment, le dispositif comprend une pièce 18 en forme de marches d'épaisseurs déterminées et réalisée en un matériau de référence. La pièce 18 peut défiler à volonté dans le faisceau ou bien être positionnée hors du trajet du faisceau grâce à un mouvement de translation non représenté.

Chaque détecteur 30a, 30b, ... de l'empilement 30 est connecté au système de commande et de traitement 26. Dans cette variante, les mesures d'intensités transmises pour chaque spectre découpé dans le spectre large par le filtrage dû aux détecteurs sont effectuées simultanément. Le traitement réalisé par le système 26 pour obtenir la fonction d'atténuation est similaire à celui décrit précédemment.

A l'aide de l'un des dispositifs et du procédé qui viennent d'être décrits, lors d'une étape préliminaire effectuée après une étape de calibration et réalisée une fois pour toute, on détermine des fonctions d'atténuation d'au moins trois matériaux de référence, exprimées en fonction de u.

Les matériaux de test que l'on recherche dans la composition de l'objet à caractériser peuvent être de n'importe quelle nature.

On choisit une gamme de numéros atomiques effectifs allant par exemple de 5 à 30 et dans cette gamme, on choisit des matériaux de référence ayant des numéros atomiques effectifs, Z effectif, régulièrement espacés de manière à couvrir cette gamme de référence.

A titre d'exemple, la suite de la description est donnée pour quatre matériaux de référence. Cependant, la présente invention s'applique en utilisant au moins deux matériaux de référence.

Le premier matériau de référence possède un Z effectif compris dans une gamme allant de 2 à 7; ce peut être par exemple du polyéthylène, possédant un Z effectif environ égal à 5,3.

Le second matériau de référence possède un Z effectif compris dans une gamme allant de 7 à 10; ce peut être par exemple du Téflon, possédant un Z effectif environ égal à 8.

Le troisième matériau de référence possède un Z effectif compris dans une gamme allant de 10 à 17 ; ce peut -être par exemple du Duralumin, possédant un Z effectif environ égal à 13,5.

Le quatrième matériau de référence possède un Z effectif compris dans une gamme allant de 17 à 30; ce peut -être par exemple du fer, possédant un Z effectif environ égal à 26.

Lors d'une autre étape préliminaire réalisée une fois pour toute, on détermine les fonctions d'atténuation (exprimées en fonction de u) de matériaux de test.

Ces matériaux de test sont les matériaux dont on recherche la présence dans la composition de l'objet inspecté. Ces matériaux de test peuvent être par exemple des explosifs ou de la drogue.

Le système de traitement 26 détermine autant de fonctions de projection que de matériaux de référence. Ces fonctions de projection forment une base calculée à partir des fonctions d'atténuation des matériaux de référence. Elles sont notées $F_{p1}$, $F_{p2}$, $F_{p3}$, $F_{p4}$.

Pour déterminer les fonctions de projection, le système de traitement 26 calcule d'abord tous les produits scalaires des fonctions d'atténuation des matériaux de référence entre elles. Ces produits scalaires forment une matrice définie, positive, qui est diagonalisée. Le résultat de la diagonalisation est la détermination de valeurs propres auxquelles sont associées des fonctions propres orthogonales entre elles. Toute base de fonctions de projection est determinée à partir de la base formée par les fonctions propres. En particulier, on peut utiliser directement la base formée par les fonctions propres.

De façon plus spécifique, la détermination des fonctions de projection peut, par exemple, s'effectuer en utilisant une méthode 'bien connue, dénommée analyse aux composants principales.

Si l'on appelle $AH_1$, $AH_2$, $AH_3$, $AH_4$ ... les fonctions Atténuations des matériaux de référence, cette méthode procède comme suit:

- On construit d'abord une matrice carré M dont les éléments sont les produits scalaires deux à deux des fonctions AHi . Par produit scalaire on entend, par exemple, le produit scalaire canonique des fonctions: $M_{ij} = AH_i . AH_j = \int AH_i(u) . AH_j(u) . du$ les bornes de l'intégrale étant les valeurs extrèmes de la variable u correspondant à la plage d'énergie E considérée.

- On peut montrer que M est diagonalisable et que l'on peut l'écrire: $M = \underline{P}^{-1} . D. \underline{P}$ où $\underline{P}$ est la matrice de passage, $\underline{P}^{-1}$ est la matrice inverse de $\underline{P}$ et D est la matrice diagonale associée à M. Les vecteurs propres de M, représentés par les colonnes des $\underline{P}$, sont orthogonaux.

- Les fonctions de projections $F_{p1}$, $F_{p2}$, $F_{p3}$, $F_{p4}$ sont obtenues par des combinaisons linéaires des fonctions $AH_i$ dont les coefficients sont les coordonnées des vecteurs propres de M, c'est à dire les colonnes de la matrice $\underline{P}$.

- On montre aisement que la base formée des $F_{p1}$, $F_{p2}$, ... est une base orthogonale.

Les fonctions de projection sont enregistrées dans une mémoire du système 26.

Les fonctions d'atténuation des matériaux de test sont projetées sur la base, c'est à dire sur les fonctions de projection. Pour chaque matériau de test, le système de traitement 26 détermine un ensemble de quatre valeurs t1, t2, t3, t4 égaux aux différents coefficients de projection. Si l'on note $Att_T$ la fonction d'atténuation d'un matériau de test, on a donc la relation:

$$Att_T = t_1 F_{p1} + t_2 F_{p2} + t_3 F_{p3} + t_4 F_{p4}$$

La fonction d'atténuation $Att_T$, comme d'ailleurs toutes les fonctions d'atténuation déterminées par le procédé décrit plus haut, peut s'écrire comme le produit d'une fonction $Att_T$ unitaire correspondant à une épaisseur massique de 1 g/cm2 multipliée par l'épaisseur massique e exprimée en g/cm2 du matériau considéré:

$$Att_T = Att_T unitaire \times e$$

On comprend donc que de la même manière, les coefficients t1, t2 ... , peuvent s'exprimer selon la formule :

$$t_1 = t_1 \text{ unitaire} \times e$$

$$t_2 = t_2 \text{ unitaire} \times e$$

Or l'épaisseur est difficile à estimer avec précision. C'est pourquoi, à partir des quatre coefficients déterminés par projection, on calcule trois coefficients indépendants de l'épaisseur et appelés coefficients de comparaison dans la suite.

Les valeurs propres calculées pour déterminer les fonctions de projection sont classées par ordre décroissant. Les coefficients de comparaison sont par exemple le résultat de la division des coefficients de projection t2, t3, t4 par le coefficient t1 correspondant à la projection sur la fonction de projection associée à la valeur propre la plus grande.

On comprend que ces rapports sont indépendants de l'épaisseur des matériaux. Ils sont enregistrés en mémoire du système de traitement 26.

Les objets à caractériser sont placés sur le convoyeur 28 (figure 1 ou 3) et défilent dans le faisceau de rayons X. La vitesse de convoyage est de l'ordre de 15 cm/s. A fréquence fixe, par exemple 100 Hz, les détecteurs de la barrette 20 délivrent un signal proportionnel à l'intensité du faisceau transmis par l'objet. Ainsi, colonne après colonne (une ligne correspondant à l'ensemble de la barrette), le système de traitement 26 détermine en chaque point de l'objet une fonction d'atténuation exprimée en fonction de u.

Le système de traitement 26 effectue ensuite, pour chaque point de l'objet, une projection de la fonction d'atténuation sur la base des fonctions de projection. Quatre coefficients de projection sont donc calculés en chaque point de l'objet.

Pour un point de l'objet, si on note $Att_o$ la fonction d'atténuation de l'objet, on a alors la relation:

$$Att_o = a_1 F_{p1} + a_2 F_{p2} + a_3 F_{p3} + a_4 F_{p4}$$

où a1, a2, a3, a4 représentent les coefficients de projection, au point considéré.

De manière similaire au calcul effectué pour les coefficients de projection des matériaux de test, on détermine des coefficients de comparaison à partir de l'ensemble ($a_1$, $a_2$, $a_3$, $a_4$). Pour cela, le système de traitement 26 effectue par exemple les rapports $a_2/a_1$, $a_3/a_1$, $a_4/a_1$ qui sont des coefficients indépendants de l'épaisseur de l'objet.

Pour chaque point de l'objet, des moyens de comparaison, constitué du système de traitement 26, comparent l'ensemble des coefficients de comparaison de l'objet aux ensembles de coefficients de comparaison des matériaux de test. De cette comparaison, on déduit la présence de matériau de test dans la composition de l'objet au point considéré lorsque les coefficients de comparaison ont des valeurs voisins.

La description qui précède s'applique au cas où l'objet à caractériser est homogène. Mais dans le cas le plus général, les objets sont rarement homogènes. En effet, si l'objet est un bagage dans lequel on recherche la présence d'explosifs, alors cet objet est constitué d'objets qualifiés d'unitaires. Les fonctions d'atténuation mesurées correspondent donc à l'atténuation de l'empilement et non à un objet unitaire.

Sur la figure 4, on a représenté schématiquement un bagage 1 contenant deux objets unitaires 2, 3 empilés. Le bagage possède une atténuation A1, les objets 2 et 3 possèdent des atténuations respectivement A2 et A3.

Comme on peut le voir sur la figure 4, lors des mesures en transmission, le bagage seul conduit à une atténuation A1, la superposition du bagage et de l'objet 2 conduit à une atténuation A1 + A2, la superposition du bagage et de l'objet seul conduit à une atténuation A1 + A3 et l'empilement bagage - objet 1 - objet 2 possède une atténuation A1 + A2 + A3. Ainsi au lieu de détecter trois objets (le bagage, l'objet 2 et l'objet 3), le dispositif identifiera quatre objets dont un seul aura une partie déterminée avec une fonction d'atténuation correcte (une partie du bagage).

Pour déterminer l'atténuation de chaque objet unitaire, l'invention préconise de former une image de contours, les contours devant être compris ici comme les zones de transition entre les objets unitaires, une zone de transition étant définie par la zone correspondant à une variation important du rayonnement transmis.

Le terme "image" doit ici être compris comme un tableau de valeurs, chaque valeur étant attribuée à un pixel de l'image. Cette image n'est pas obligatoirement visualisée par des moyens d'affichage.

L'image des contours peut être réalisée à partir de plusieurs tableaux de données. Par exemple, elle peut être réalisée à partir des signaux délivrés par les détecteurs pour l'irradiation de l'objet dans la gamme de plus haute énergie; elle peut-être aussi réalisée après la détermination de la fonction d'atténuation, à partir des valeurs d'atténuation en chaque point et à une énergie donnée, 140 keV par exemple; elle peut aussi se faire à partir des valeurs des coefficients de projection en chaque point, de préférence à partir du coefficient de projection sur la fonction $F_{p1}$ qui est le plus stable.

L'image des contours peut être réalisée à partir de l'un de ces tableaux de données mais avantageusement on réalise plusieurs images de contours à partir de plusieurs de ces tableaux de données. Ces images sont ensuite comparées les unes aux autres ce qui permet d'éliminer les fausses détections de contours et d'aboutir à une image de contours définitive.

La réalisation de cette image de contours est effectuée'par des moyens de traitement d'image 29 (fig. 1 et 3) qui sont reliés aux moyens de traitement 26. Cette séparation entre les moyens de traitement 26 et 29 est artificielle et n'a pour but que la simplicité de la description. En effet, dans la réalité, tous les traitements, les calculs, les enregistrements en mémoire sont effectués par un même dispositif, par exemple un ordinateur.

Les moyens de traitement d'image 29 travaillent à partir des données qui lui sont fournies par le système de traitement 26. Pour réaliser l'image des contours recherchée, tous les procédés connus peuvent être utilisés, par exemple on peut utiliser les opérateurs de Soebel ou une méthode de filtrage.

Comme on l'a déjà précisé, par contour on entend une zone de transition, c'est à dire une bande de plusieurs pixels, par exemple 5, suivant des lignes définies par l'application de l'algorithme choisi. La figure 5 représente une vue partielle de la partie 40 de l'objet de la figure 4 telle qu'elle est définie par le traitement d'image. La zone hachurée 5 représente la zone de transition.

Une fois l'image des contours définitive réalisée, celle ci est mise en relation avec les ensembles de coefficients de projection pour chaque point de l'objet. Dans les zones de transition, le système de traitement 26 détermine des variations des coefficients de projection de l'objet. Par variations, on doit comprendre toute modification ou évolution des coefficients de projection ou d'une combinaison de ces coefficients, selon une direction choisie dans la zone de transition.

Avantageusement, cette direction est la direction perpendiculaire à la ligne principale 6 du contour 5, la ligne principale étant définie par la ligne des points où la variation du rayonnement transmis est maximale pour la zone considérée.

On décrit maintenant un exemple de détermination de variations concernant l'ensemble des coefficients de projection des points $_p1$, $_p2$, $_p3$, $_p4$, $_p5$ coupant la zone de transition 5 perpendiculairement à la ligne 6.

La zone de transition 5 représentée sur la figure 5 sépare le fond constitué par le bagage et l'objet 3. Lors de la détermination des fonctions d'atténuation, de part et d'autre du contour, on trouve la fonction d'atténuation référencée A1 et correspondant au bagage et la fonction d'atténuation A1 + A3 correspondant à la superposition du bagage et de l'objet 3 (et non la fonction d'atténuation de l'objet 3 seul).

Le système de traitement 26 applique une méthode de gradients pour déterminer la fonction d'atténuation de l'objet 3 seul. En fait, le calcul s'effectue sur les coefficients de projection des fonctions d'atténuation. On ne décrit le procédé que pour un seul coefficient de projection, mais il va de soi qu'il est appliqué pour chaque coefficient de projection de l'ensemble des coefficients de projection déterminé pour chaque point.

Le système de traitement 26 soustrait le coefficient de projection au point $_p1$ du coefficient de projection au point $_p3$. Si $a_{11}$ est le coefficient de projection sur la fonction $F_{p1}$ au point $_p1$, si $a'_{13}$ est le coefficient de projection sur $F_{p1}$ au point $_p3$, le résultat de la soustraction donne le coefficient de projection $a_{13}$ de la fonction d'atténuation $A_3$ seule sur la fonction $F_{p1}$.

En répétant cette opération pour tous les coefficients de projection en tous les points de la zone de transition, le système de traitement détermine les coefficients de projection des fonctions d'atténuation de chaque objet unitaire. Il en déduit des coefficients de comparaison en effectuant les rapports des coefficients de projection par celui correspondant à la projection sur la fonction de projection $F_{p1}$. Ces coefficients de comparaison sont comparés aux coefficients de comparaison pour les matériaux de test. De cette comparaison, on déduit la présence ou l'absence d'un matériau de test dans la composition de l'objet unitaire considéré.

Le procédé conforme à l'invention permet donc d'isoler chaque objet unitaire et de là, détermine des coefficients de comparaison utilisés pour la reconnaissance de la présence d'un matériau de test dans la composition des objets unitaires.

On note qu'en fait, dans l'exemple décrit, ce sont les transitions entre objets unitaires qui sont recherchées. Au cas où on détecte une transition vers un objet unitaire comprenant un matériau de test dans sa composition, les comparaisons entre coefficients de comparaison sont étendues à tout l'intérieur du contour ou au moins à une zone étendue autour du contour. De cette manière, les détections isolées de matériau de test sont éliminées comme étant de fausse détection. Pour chaque information déterminée, par exemple pour chaque ensemble de coefficients de projection de l'objet global, un tableau de valeurs est constitué. Chacun de ces tableaux de valeurs peuvent être la base de la réalisation d'une image. Grâce à ces tableaux, une ou plusieurs images peuvent être visualisées par des moyens d'affichage 36 comprenant un écran de contrôle 40 (fig.1). Ces moyens d'affichage sont dôtés de moyens de traitement 38 qui permettent à volonté d'agrandir telle ou telle partie de l'image ou de faire des variations de contraste ou tout autre traitement usuel sur les images. L'image des contours peut aussi être visualisée, seule ou superposée à une autre image. Les moyens 36 et 38 sont déjà couramment utilisés dans le domaine de l'imagerie par rayons X et ne seront donc pas décrits plus en détails.

Les points de l'image pour lesquels un matériau de test entre dans la composition de l'objet peuvent être mis en évidence sur l'image affichée par une visualisation en couleur ou par un affichage clignotant. La détection d'un matériau de test peut aussi déclencher une alarme sonore ou l'affichage d'un message particulier sur l'écran de contrôle 40.

## Revendications

1. Procédé pour la reconnaissance d'au moins un matériau de test déterminé dans la composition d'un objet (1), caractérisé en ce qu'il comprend les étapes suivantes:

   A. préalablement, déterminer la fonction d'atténuation sur un spectre large de rayons X d'au moins deux matériaux de référence et en déduire des fonctions de projection ($F_{P1}$, $F_{P2}$, ...) formant une base;
   B. lors d'une seconde étape préliminaire, déterminer la fonction d'atténuation sur ledit spectre de rayons X d'au moins un matériau de test et projecter la fonction d'atténuation de chaque matériau de test sur ladite base;
   C. pour chaque point de l'objet (1),

   - déterminer la fonction d'atténuation de l'objet (1) pour ledit spectre de rayons X,

- projeter la fonction d'atténuation de l'objet (1) sur ladite base,
- comparer les projections ainsi obtenues aux projections de chaque matériau de test et déduire de cette comparaison si au moins un matériau de test entre dans la composition de l'objet (1), au point considéré.

2. Procédé selon la revendication 1 caractérisé en ce que le spectre de rayons X s'étend au moins sur une gamme allant de 30 à 100 keV.

3. Procédé selon la revendication 1, caractérisé en ce que la fonction d'atténuation de l'objet, les fonctions d'atténuation des matériaux de référence, les fonctions d'atténuation des matériaux de test sont toutes exprimées en fonction d'une variable u en relation bijective avec l'énergie E des rayons X.

4. Procédé selon la revendication 3 caractérisé en ce que la variable u est choisie égale à l'atténuation d'une épaisseur fixée d'un matériau de calibration (18).

5. Procédé selon la revendication 4 caractérisé en ce que le matériau de calibration possède un numéro atomique Z effectif compris dans une gamme allant de 5 à 26.

6. Procédé selon la revendication 1 caractérisé en ce que les fonctions de projection sont orthogonales entre elles.

7. Procédé selon la revendication 6 caractérisé en ce que les fonctions de projection sont des fonctions propres associées à des valeurs propres déterminées par la diagonalisation d'une matrice constituée des produits scalaires des fonctions d'atténuation des matériaux de référence.

8. Procédé selon la revendication 7 caractérisé en ce que, lors d'une étape préliminaire, pour chaque matériau de test, on détermine un ensemble de coefficients de projection résultant de la projection des fonctions d'atténuation des matériaux de test sur ladite base, et lesdites valeurs propres étant classées par ordre décroissant, de chaque ensemble de coefficients de projection, on déduit un ensemble de coefficients de comparaison pour les matériaux de test en divisant chaque coefficient de projection de l'ensemble considéré par le coefficient de l'ensemble considéré correspondant à la projection sur la fonction de projection associée à la plus grande des valeurs propres, ces ensembles de coefficients de comparaison pour les matériaux de test étant utilisés pour des comparaisons permettant de déduire si au moins un matériau de test entre dans la composition de l'objet (1).

9. Procédé selon la revendication 8 caractérisé en ce que l'objet inspecté étant composé de la réunion d'objets unitaires (1, 2, 3),

- on réalise une image des contours (5) des objets unitaires, les contours (5) étant des zones de transition entre les différents objets unitaires,
- pour chaque point de l'objet (1), on détermine un ensemble de coefficients de projection résultant de la projection de la fonction d'atténuation de l'objet sur ladite base,
- on détermine des variations des ensembles de coefficients de projection de l'objet à l'intérieur des zones de transition (5), et
- on déduit de ces variations des coefficients de comparaison avec les coefficients de comparaison pour les matériaux de test.

10. Procédé selon la revendication 1 caractérisé en ce que les numéros atomiques effectifs des matériaux de référence sont régulièrement répartis dans une gamme allant de 3 à 30.

11. Procédé selon la revendication 10 caractérisé en ce qu'un premier matériau de référence est choisi parmi les matériaux présentant un numéro atomique effectif compris dans une gamme allant de 3 à 7, en ce qu'un deuxième matériau de référence est choisi parmi les matériaux présentant un numéro atomique affectif compris dans une gamme allant de 7 à 10; en ce qu'un troisième matériau de référence est choisi parmi les matériaux présentant un numéro atomique affectif compris dans une gamme allant de 10 à 17 et en ce qu'un quatrième matériau de référence est choisi parmi les matériaux présentant un numéro atomique effectif compris dans une gamme allant de 17 à 30.

12. Procédé selon la revendication 11 caractérisé en ce que au moins un des matériaux de référence est choisi comme suit: le premier matériau de référence est du polyethylène, le second matériau de référence est du Téflon, le troisième matériau de référence est du Duralumin, le quatrième matériau de référence est du fer.

13. Procédé selon l'une des revendications précédentes caractérisé en ce que les matériaux de test sont des explosifs et/ou de la drogue.

14. Dispositif pour la mise en oeuvre d'un procédé conforme à la revendication 1 caractérisé en ce qu'il comprend:

- des moyens (10, 12, 16, 17, 18, 20 ou 30) pour déterminer des fonctions d'atténuation sur un spectre large de rayons X, ces fonctions d'atténuation étant exprimées en fonction d'une variable u en relation bijective avec l'énergie des rayons X,
- des moyens de traitement (26) aptes à effectuer des projections des fonctions d'atténuation sur des fonctions formant une base et préalablement déterminées à partir des fonctions d'atténuation d'au moins trois matériaux de référence,
- des moyens de convoyage (28) d'un objet (1) à caractériser, permettant de soumettre cet objet aux moyens pour déterminer une fonction d'atténuation,
- des moyens de comparaison (27) des projections de la fonction d'atténuation de l'objet à des projections préalablement effectuées de fonctions d'atténuation d'au moins un matériau de test et pour déduire de cette comparaison si au moins un matériau de test entre dans la composition de l'objet,
- des moyens d'affichage (36) apte à afficher au moins une image de l'objet en différenciant les points pour lesquels un matériau de test entre dans la composition de l'objet.

15. Dispositif selon la revendication 14 caractérisé en ce qu'il comprend en outre des moyens de traitement d'image (29) aptes à isoler géométriquement chaque substance de l'objet pour la formation d'une image de contours.

16. Dispositif selon la revendication 14 caractérisé en ce que les moyens pour déterminer des fonctions d'atténuation comprennent une pièce (18) en matériau de calibration, et possédant différentes épaisseurs, cette pièce (18) étant apte à défiler à volonté dans le faisceau (14, 15) de rayons X.

17. Dispositif selon la revendication 14 caractérisé en ce que les moyens pour déterminer une fonction d'atténuation comprennent une source (10, 12, 16, 17) délivrant un faisceau de rayons X successivement sur plusieurs plages spectrales et une barrette (20) de détecteurs (22), chaque détecteur (22) étant sensible à toutes les plages spectrales.

18. Dispositif selon la revendication 14 caractérisé en ce que les moyens pour déterminer une fonction d'atténuation comprennent un générateur (32, 34) de faisceau de rayons X sur un spectre large et fixe et une barrette (20) d'empilements de détecteurs (30), chaque détecteur (30a, 30b) d'un empilement jouant le rôle de filtre passe haut pour le détecteur adjacent suivant.

## Patentansprüche

1. Verfahren zur Erkennung mindestens eines bestimmten Testmaterials in der Zusammensetzung eines Gegenstands (1), **dadurch gekennzeichnet, daß**

   das Verfahren die folgenden Schritte umfaßt:

   a) die einleitende Bestimmung der Abschwächungsfunktion von mindestens zwei Bezugsmaterialien über ein breites Röntgenstrahlspektrum und die Ableitung von eine Basis bildenden Abbildungsfunktionen ($F_{P1}$, $F_{P2}$, ...) daraus;

   b) in einem zweiten einleitenden Schritt die Bestimmung der Abschwächungsfunktion mindestens eines Testmaterials über das vorstehende Röntgenstrahlspektrum und die Abbildung der Abschwächungsfunktion jedes Testmaterials auf die vorstehende Basis;

   c) für jeden Punkt des Gegenstands (1)

   - die Bestimmung der Abschwächungsfunktion des Gegenstands (1) für das vorstehende Röntgenstrahlspektrum,
   - die Abbildung der Abschwächungsfunktion des Gegenstands (1) auf die vorstehende Basis,
   - der Vergleich der so erhaltenen Abbildungen mit den Abbildungen jedes Testmaterials und die Ableitung aus diesem Vergleich, ob mindestens ein Testmaterial in der Zusammensetzung des Gegenstands (1) am betrachteten Punkt enthalten ist.

2. Verfahren nach Anspruch 1, **dadurch gekennzeichnet, daß** unter dem Röntgenstrahlspektrum mindestens ein Wellenbereich verstanden wird, welcher im Bereich von 30 bis 100 keV liegt.

3. Verfahren nach Anspruch 1, **dadurch gekennzeichnet, daß** die Abschwächungsfunktion des Gegenstands, die Abschwächungsfunktionen der Bezugsmaterialien und die Abschwächungsfunktionen der Testmaterialien alle als Funktion einer Variablen u ausgedrückt sind, welche in einem bijektiven Verhältnis zur Energie E der Röntgenstrahlen steht.

4. Verfahren nach Anspruch 3, **dadurch gekennzeichnet, daß** die Variable u so gewählt wird, daß sie gleich der Abschwächung eines Eichmaterials (18) mit festgelegter Dicke ist.

5. Verfahren nach Anspruch 4, **dadurch gekennzeichnet, daß**

das Eichmaterial eine effektive Kernladungszahl Z besitzt, welche in einem Bereich von 5 bis 26 enthalten ist.

6. Verfahren nach Anspruch 1,
**dadurch gekennzeichnet, daß**
die Abbildungsfunktionen orthogonal zueinander sind.

7. Verfahren nach Anspruch 6,
**dadurch gekennzeichnet, daß**
die Abbildungsfunktionen Funktionen sind, welche eindeutig mit Werten verbunden sind, die durch die Diagonalisierung einer aus Skalarprodukten der Abschwächungsfunktionen der Bezugsmaterialien aufgebauten Matrix eindeutig bestimmt werden.

8. Verfahren nach Anspruch 7,
**dadurch gekennzeichnet, daß**
in einem einleitenden Schritt für jedes Testmaterial eine Gesamtheit von Abbildungskoeffizienten, welche durch die Abbildung der Abschwächungsfunktionen der Testmaterialien auf die vorstehende Basis erhalten werden, bestimmt wird und die vorstehenden eindeutigen Werte in abnehmender Ordnung klassifiziert werden, aus jeder Gesamtheit an Abbildungskoeffizienten eine Gesamtheit an Vergleichskoeffizienten für die Testmaterialien abgeleitet wird, indem jeder Abbildungskoeffizient der betrachteten Gesamtheit durch den Koeffizient der betrachteten Gesamtheit geteilt wird, welcher der mit dem größten eindeutigen Wert verbundenen Abbildung auf die Abbildungsfunktion entspricht, wobei die Gesamtheiten an Vergleichskoeffizienten für die Testmaterialien für Vergleiche verwendet werden, durch welche die Ableitung möglich wird, ob mindestens ein Testmaterial in der Zusammensetzung des Gegenstands (1) enthalten ist.

9. Verfahren nach Anspruch 8,
**dadurch gekennzeichnet, daß**
der untersuchte Gegenstand (1) aus einem Zusammenschluß einzelner Gegenstände (1, 2, 3) besteht,

- man ein Umrißbild (5) der einzelnen Gegenstände erzeugt, wobei die Umrisse (5) Übergangsbereiche zwischen den verschiedenen einzelnen Gegenständen sind,
- man für jeden Punkt des Gegenstands (1) eine Gesamtheit an Abbildungskoeffizienten, welche durch die Abbildung der Abschwächungsfunktionen des Gegenstands auf die vorstehende Basis erhalten werden, bestimmt,
- man die Änderungen der Gesamtheiten der Abbildungskoeffizienten des Gegenstands in den Übergangsbereichen (5) bestimmt, und
- aus diesen Änderungen Koeffizienten zum Vergleich mit den Vergleichskoeffizienten für die Testmaterialien ableitet.

10. Verfahren nach Anspruch 1,
**dadurch gekennzeichnet, daß**
die effektiven Kernladungszahlen der Bezugsmaterialien gleichmäßig in einem Bereich von 3 bis 30 verteilt sind.

11. Verfahren nach Anspruch 10,
**dadurch gekennzeichnet, daß**
ein erstes Bezugsmaterial aus den Materialien ausgewählt wird, welche eine effektive Kernladungszahl aus einem Bereich von 3 bis 7 aufweisen, ein zweites Bezugsmaterial aus den Materialien ausgewählt wird, welche eine effektive Kernladungszahl aus einem Bereich von 7 bis 10 aufweisen; ein drittes Bezugsmaterial aus den Materialien ausgewählt wird, welche eine effektive Kernladungszahl aus einem Bereich von 10 bis 17 aufweisen und ein viertes Bezugsmaterial aus den Materialien ausgewählt wird, welche eine effektive Kernladungszahl aus einem Bereich von 17 bis 30 aufweisen.

12. Verfahren nach Anspruch 11,
**dadurch gekennzeichnet, daß**
mindestens ein Bezugsmaterial wie folgt ausgewählt ist: Das erste Bezugsmaterial ist Polyethylen, das zweite Bezugsmaterial ist Teflon, das dritte Bezugsmaterial ist Duraluminium, das vierte Bezugsmaterial ist Eisen.

13. Verfahren nach einem der vorhergehenden Ansprüche,
**dadurch gekennzeichnet, daß**
die Testmaterialien Sprengstoffe und/oder Rauschgift sind.

14. Vorrichtung zur Durchführung des Verfahrens nach Anspruch 1,
**dadurch gekennzeichnet, daß**
die Vorrichtung umfaßt:

- Einrichtungen (10, 12, 16, 17, 18, 20 oder 30) zur Bestimmung der Abschwächungsfunktionen über einen breites Röntgenstrahlspektrum, wobei die Abschwächungsfunktionen als Funktion einer Variable u ausgedrückt werden, welche in einem bijektiven Verhältnis zur Energie der Röntgenstrahlen steht,
- Verarbeitungseinrichtungen (26), welche zur Durchführung von Projektionen der Abschwächungsfunktionen auf Funktionen,
- Verarbeitungseinrichtungen (26), welche zur Durchführung von Abbildungen der Abschwächungsfunktionen auf Funktionen, welche eine Basis bilden und vorab ausgehend von Abschwächungsfunktionen von mindestens drei Bezugsmaterialien bestimmt wurden, befähigt sind,

- Einrichtungen (28) zur Beförderung eines zu untersuchenden Gegenstands (1), durch welche es ermöglicht wird, den Gegenstand den Einrichtungen zur Bestimmung einer Abschwächungsfunktion zuzuführen,

- Einrichtungen (27) zum Vergleich der Abbildungen der Abschwächungskurve des Gegenstands mit den Abbildungen, welche vorab von den Abschwächungsfunktionen von mindestens einem Testmaterial angefertigt wurden, und zur Ableitung aus diesem Vergleich, ob mindestens ein Testmaterial in der Zusammensetzung des Gegenstands enthalten ist,

- Anzeigeeinrichtungen (36), welche zur Anzeige mindestens eines Bilds des Gegenstands befähigt sind, indem die Punkte unterschieden werden, bei welchen ein Testmaterial in der Zusammensetzung des Gegenstands enthalten ist.

15. Vorrichtung nach Anspruch 14,
**dadurch gekennzeichnet, daß**
außerdem Einrichtungen (29) zur Bildverarbeitung eingeschlossen sind, welche zur geometrischen Isolierung jeder Substanz des Gegenstands zur Erzeugung eines Umrißbilds befähigt sind.

16. Vorrichtung nach Anspruch 14,
**dadurch gekennzeichnet, daß**
die Einrichtungen zur Bestimmung der Abschwächungsfunktionen ein Stück Eichmaterial (18) enthalten und dieses Stück (18) dazu befähigt ist, nach Belieben in das Strahlenbündel (14, 15) der Röntgenstrahlen einzudringen, da es unterschiedliche Dicken besitzt.

17. Vorrichtung nach Anspruch 14,
**dadurch gekennzeichnet, daß**
die Einrichtungen zur Bestimmung einer Abschwächungsfunktion eine Quelle (10, 12, 16, 17), welche ein Bündel aus Röntgenstrahlen aufeinanderfolgend über mehrere Spektralbereiche liefert, sowie ein Feld (20) aus Erfassungsvorrichtungen (22) einschließen, wobei jede Erfassungsvorrichtung (22) in allen Spektralbereichen empfindlich ist.

18. Vorrichtung nach Anspruch 14,
**dadurch gekennzeichnet, daß**
die Einrichtungen zur Bestimmung einer Abschwächungsfunktion einen Generator (32, 34) für Röntgenstrahlbündel über einen breiten und festen Spektralbereich sowie ein Feld (20) aus Stapeln von Erfassungsvorrichtungen (30) einschließt, wobei jede Erfassungsvorrichtung (30a, 30b) eines Stapels die Aufgabe eines Hochpaß-Filters für die angrenzende folgende Erfassungsvorrichtung übernimmt.

**Claims**

1. A method for identifying at least one specific target material in the constitution of an object (1), characterized in that it comprises the following stages :

A. Previously determining the attenuation function across a wide x-ray spectrum of at least two reference materials and therefrom deriving base-forming projection functions ($F_{p1}, F_{p2}...$),
B. During a second preliminary stage, determining the attenuation of at least one target material across x-ray spectrum and projecting the attenuation function of each target material onto said base,
C. For each point of the object (1),

. determining the attenuation function of the object (1) for said x-ray spectrum,
. projecting the attenuation function of the object (1) onto said base,
. comparing the projections so obtained with the projections from each target material and deducing from this comparison whether at least one target material is part of the constitution of the object (1) at the point being tested.

2. Method defined in claim 1, characterized in that the x-ray spectrum evinces a range between at least 30 Kev and 100 Kev.

3. Method defined in claim 1, characterized in that the object's attenuation function, further the reference-material attenuation functions and the target-material test functions all are expressed in terms of an independent variable u bijectively related to the energy E of the x-ray.

4. Method defined in claim 3, characterized in that the variable u is selected to be the attenuation value of a fixed thickness of a calibration material (18).

5. Method defined in claim 4, characterized in that the calibration material evinces an atomic number effective Z in a range from 5 to 26.

6. Method defined in claim 1, characterized in that the projection functions are mutually orthogonal.

7. Method defined in claim 6, characterized in that the projection functions are eigenfunctions associated with eigenvalues determined by diagonalizing a matrix constitued by the scalar products of the reference-material attenuation functions.

8. Method defined in claim 7, characterized in that during a preliminary stage and for each target material, a set of projection coefficients resulting from the projection of the target-material attenuation functions onto said base is determined, said eigenvalues being arranged in decreasing order, in that a set of comparison coefficients for the target materials is derived from each set of projection coefficients by dividing each projection coefficient of the set under consideration by the coefficient of the particular set corresponding to the projection onto projection function associated to the largest of the eigenvalues, these sets of comparison coefficients for the target materials being used in comparisons allowing inferring whether at least one target material is part of the constitution of object (1).

9. Method defined in claim 8, characterized in that, because the inspected object is constituted of discret bodies (1, 2, 3),

   . an image is made of the contours (5) of the discrete bodies, said contours (5) being transition zones between the different discrete bodies,
   . for each point of the object (1), a set of projection coefficients resulting from the projection of the attenuation function of the object onto said base is determined,
   . variations in the sets of projection coefficients of object inside the transition zones (5) are determined, and,
   . from said variations, comparison coefficients with the comparison coefficients of the target materials are derived.

10. Method defined in claim 1, characterized in that the effective atomic numbers of the reference materials are regularly spaced in a range from 3 to 30.

11. Method defined in claim 10, characterized in that a first reference material is selected from the materials evincing an effective atomic number in a range from 3 to 7, in that a second reference material is selected from the materials evincing an effective atomic number in a range from 7 to 10, in that a third reference material is selected from the materials evincing an effective atomic number in a range from 10 to 17 and in that a fourth reference material is selected from among the materials evincing an effective atomic number in the range from 17 to 30.

12. Method defined in claim 11, characterized in that a least one of the reference materials is selected as follows : the first reference material is polyethylene, the second reference material is teflon, the third reference material is Duralumin, the fourth reference material is iron.

13. Method defined in one of the above claims, characterized in that the target materials are explosives and/or drugs.

14. Apparatus implementing a method defined in claim 1, characterized in that it comprises :

   . means (10, 12, 16, 17, 18, 20 or 30) determining attenuation functions across a wide x-ray spectrum, said attenuation functions being expressed in terms of an independent variable u which is bijectively related to the energy of the x-rays,
   . processing means (26) able to project attenuation functions onto functions forming a base and previously determined from the attenuation functions of at least three reference materials,
   . conveying means (28) for an object (1) to be analyzed, said conveying means allowing to expose said object to the attenuation-function determining means,
   . comparison means (27) comparing the object's attenuation-function projection with previously implemented attenuation-function projections of at least one target material, in order to infer from this comparison whether at least one target material is present in the object constitution,
   . displays (36) to display at least one object image by distinguishing the points at which a target material is present in the object constitution.

15. Apparatus defined in claim 14, characterized in that it furthermore comprises image-processing means (29) able to geometrically isolate each object substance to form a contour image.

16. Apparatus defined in claim 14, characterized in that the attenuation-function determining means comprise a calibration-material component (18)) and evince different thicknesses, said component (19) being displaceable at will into the x-ray beam (14, 15).

17. Apparatus defined in claim 14, characterized in that the attenuation-function determining means comprise a source (10, 12, 16, 17) emitting an x-ray beam in sequence in several spectral ranges and further comprise a strip (20) of detectors (22), each detector (22) responding to all the spectral ranges.

18. Apparatus defined in claim 14, characterized in that the attenuation-function determining means comprise an x-ray beam generator (32, 34) with a wide and fixed spectrum and a strip (20) of stacked detectors (30), each detector (30a, 30b...) of a stack acting as a high-pass filter for the adjacent and following detector.

FIG.1

FIG.2

*FIG.3*

*FIG.4*

*FIG.5*